# EUROPEAN PATENT SPECIFICATION

(11) **EP 0 897 932 B1**
(45) Date of publication and mention of the grant of the patent: **01.02.2006**
(21) Application number: 98202813.6
(22) Date of filing: 21.08.1998
(51) Int. Cl.: C08F 6/08, C08C 2/04

(54) **Extraction of metal residues from polymer cements**
Extraktion von Metallrückständen aus Polymerlösungen
Extraction de résidus métalliques des ciments polymériques

(30) Priority: 22.08.1997 US 56721 P
(43) Date of publication of application: 24.02.1999
(73) Proprietor: KRATON Polymers Research B.V., 1031 CM Amsterdam (NL)
(72) Inventor: Diaz, Zaida, Houston, Texas 77077 (US); Wilkey, John David, Houston, Texas 77068 (US)
(74) Representative: Kortekaas, Marcel C.J.A.

(56) References cited:
- EP-A- 0 186 918
- EP-A- 0 316 982
- CA-A- 842 351
- GB-A- 2 295 154

## Description

### Field of the Invention

This invention pertains to extraction of metal residues, in particular the extraction of metal initiation and/or hydrogenation catalyst residues from polymer cements.

### Background of the Invention

Extraction methods for removing metal residuals from polymer cements have been known in the art. An undesirable residue found in polymer cements is the residue of hydrogenation catalyst, particularly nickel-based hydrogenation catalyst. Commercial requirements have been pushing the desired level of residual nickels in the polymer cements down to less than 1 ppm, based upon the total polymer cement. Typical extraction methods, such as mixing an aqueous solution of phosphoric acid and oxygen with a polymer cement, requires long exposure times and large, expensive equipment to reduce the nickel to marketable levels. It is therefore desirable to have a rapid extraction method which will reduce the level of residual metals in polymer cement within short exposure times.

### Summary of the Invention

It is an object of the invention to provide a rapid extraction method which will reduce the level of residual metals in polymer cement within short exposure times.

It is further an object of the invention to provide a rapid extraction method that utilises known techniques of aqueous acid extraction.

It has surprisingly been found that the rate of extraction of metal residues from a polymer cement can be significantly accelerated by the addition of small quantities of certain additives to the cement prior to an acid extraction step. Accordingly, there is provided a method of removing metal residues from a polymer cement, said method comprising: polymerising a monomer with a metal-based polymerisation initiator to give a polymer cement having metal polymerisation initiator residue; adding an organic-soluble acid having a pka no greater than 4-5, selected from the group mono(2-ethylhexyl) phosphoric acid, bis(2-ethylhexyl) phosphoric acid, mono(butyl) phosphoric acid, bis(butyl) phosphoric acid, dodecylbenzenesulfonic acid, 2-ethylhexylphosphonic acid mono(2-ethylhexyl) ester, nitrilotris(methylene)triphosphonic acid, and mixtures thereof, to the polymer cement, thereby forming an acid containing organic phase; mixing the organic phase with an aqueous phase containing a mineral acid; and recovering the polymer cement free of metal residue.

### Description of the Drawings

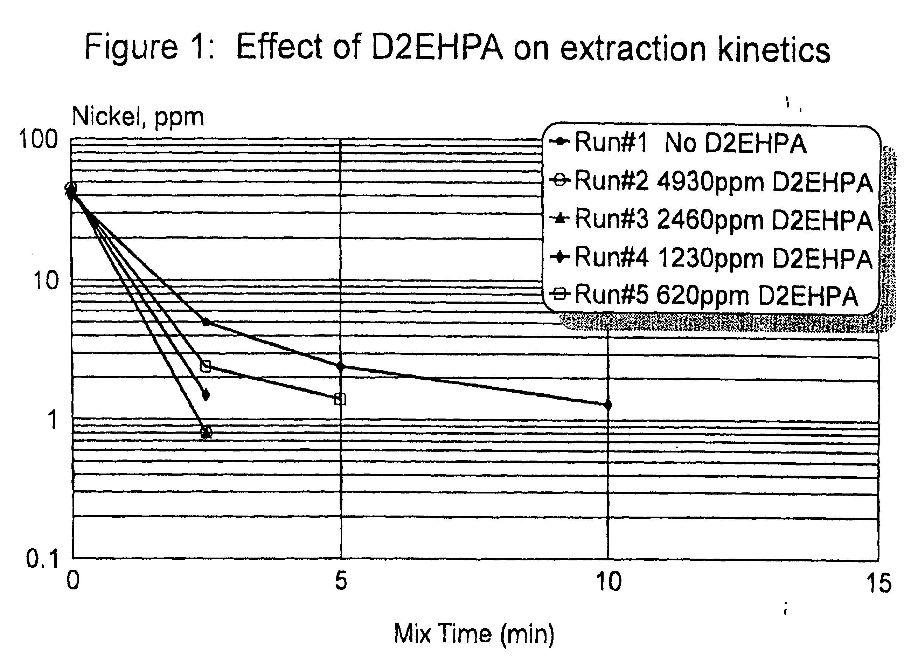

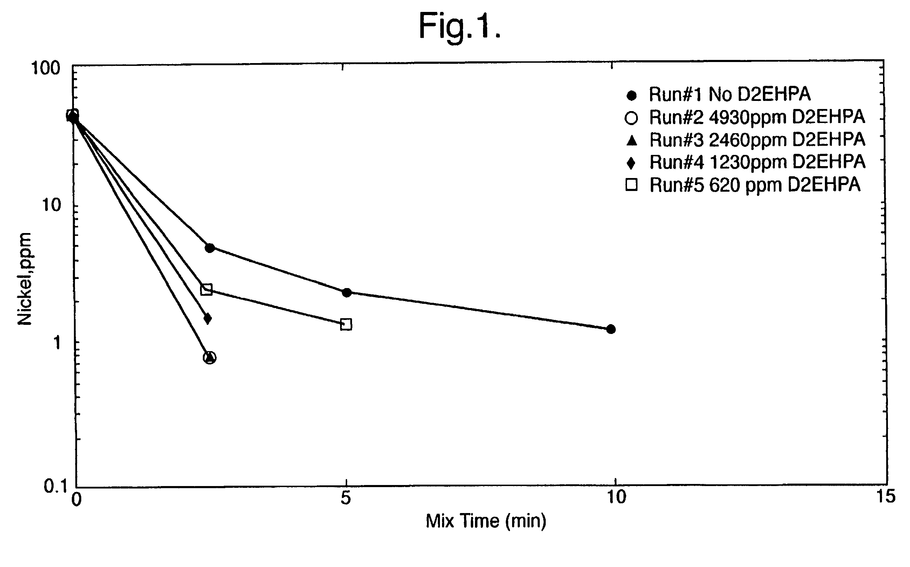

Figure 1 shows the effect of 'di-2-ethylhexyl phosphate' (D2EHPA), a mixture of mono(2-ethylhexyl) phosphoric acid and bis(2-ethylhexyl) phosphoric acid manufactured by Albright & Wilson Americas, on the extraction kinetics of a polybutadiene block co-polymer cement.

### Detailed Description of the Invention

It has surprising been found that the removal of metal residues from a polymer cement may be significantly accelerated by the inclusion of various additives to the cement prior to the extraction step.

The polymer cement is made by polymerising a monomer with a metal-based polymerisation initiator. A metal polymerisation initiator residue remains in the polymer cement, and this is what must be removed to meet commercial standards.

From GB 2295154A a process was known for hydrogenation of a polymer, containing ethylenic unsaturation. Said process comprised the steps of providing a solution or suspension of the polymer containing ethylenic unsaturation with an amount of Group VIII metal alkoxide or carboxylate and metal alkyl hydrogenation catalyst effective to permit hydrogenation of the ethylenic unsaturation upon exposure to hydrogen; exposing the polymer solution or suspension to a hydrogen partial pressure for a time period sufficient to hydrogenate greater than 90 percent of the ethylenic unsaturation; adding additional Group VIII metal alkoxide or carboxylate and metal alkyl hydrogenation catalyst to the polymer solution or suspension after greater than 90 percent of the ethylenic unsaturation has been hydrogenated; mixing the hydrogenated polymer solution or suspension with the additional Group VIII metal alkoxide or carboxylate and metal alkyl hydrogenation catalyst with an aqueous solution of an acid; and separating a hydrogenated polymer solution or suspension that contains less than 0.8 percent by weight water from the aqueous solution.

From EP 0316982A2, and in particular from claims 1, 2 and 5 and column 2, lines 39-55, a process was known for the separation of metal residues from a polymer, wherein a solution or suspension of said polymer was contacted with an aqueous solution, containing one or more inorganic acids in the presence of a monocarboxylic acid containing from 6 to 20 carbon atoms. The polymer solution or suspension was contacted with an oxidizing agent prior to or simultaneously with the contacting with the aqueous inorganic acid solution. Preferably the inorganic acid was a mineral acid and the monocarboxylic acid was preferably a branched chain alkanoic acid having from 6 to 10 carbon atoms and more preferably ethyl hexanoic acid.

From EP 0186918A2, and in particular from claims 1-9 and page 4, lines 12-13, a process was known for the removal of metal catalyst residues from water insoluble polymer solutions. Said process comprised
(a) treating the solutions with a concentrated solution of an organic acid,
(b) separating the resulting acid phase from the polymer, or alternatively to steps (a) en 9b),
(c) treating the solutions with a dicarboxylic acid, forming insoluble metal precipitates, and
(d) separating the precipitates from the polymer solution.

More preferably an agent is chosen which is capable to form a stable water-soluble complex with nickel or cobalt and aluminium (from hydrogenation catalysts) and which is capable of complexing with any lithium residues, originating from initiators and remaining after forming the initial polymers.

From WO 99/05185 (Art. 54-(3)(4) according to Art. 158 EPC), and in particular from claim 1 and page 25, lines 7-15, a process was known for producing hydrogenated block copolymers of conjugated dienes and/or vinyl aromatic hydrocarbons. Said process comprised anionically polymerising the monomers in an inert hydrocarbon solvent in the presence of an alkali metal initiator, preferably a lithium compound Rli, whereby a polymer cement is produced, contacting the cement with hydrogen in the presence of a hydrogenation catalyst and then removing the hydrogenation catalyst residue by washing the polymer cement with water or an aqueous acid. The improvement reached comprised the reduction of the viscosity of the polymer cement by polymerising the block copolymer under conditions to form a polymer with a vinyl content in the range of from 45 to 80 percent by weight.

From CA 842 351 a process was known for the removal of metallic catalyst residues from polymers, obtained by polymerising terminally unsaturated olefins in an inert liquid medium with a coordination polymerisation catalyst. Said process comprised treating a polymerisation mixture containing said polymer dissolved in said inert liquid medium and a residue of said catalyst with an organic ester of orthophosphoric acid, the molar quantity of said ester of orthophosphoric acid being at least equivalent with that of the metals of said catalyst residue, thereafter removing the reaction product of said organic ester of orthophosphoric acid with said catalyst residue from the polymerisation mixture and recovering a polymer solution essentially free of metallic catalyst residues.

According to a preferred embodiment the polymerisation mixture was contacted with adsorbent material immediately before the step of recovering a polymer solution free of catalyst residues.
More preferably mono- or di-2-ethylhexylphosphate was used as organic ester of orthophosphoric acid.
It will be appreciated that conventional means of residual metal removal involves extraction by contacting the polymer cement with an aqueous phase containing mineral acid, such as phosphoric or sulphuric acid. The cement/acid mixture is mixed at tip speeds of 3.6 m/hr (700 ft/min) or greater. Extraction time to a predetermined metal residue level typically takes 30 minutes to one hour of contacting time, making the extraction process responsible for a significant fraction of the capital deployed in a commercial unit. By adding an organic-soluble acid to the polymer cement, thereby forming an acid containing organic phase before contacting the polymer cement with the aqueous phase, a polymer cement substantially free of metal residue may be recovered in a fraction of the contact time.

A more preferred organic-soluble acid is bis(2-ethylhexyl) phosphoric acid.

Preferably, the bis (2-ethylhexyl) phosphoric acid is added at a concentration of at least 600ppm.

As little as 600 ppm of the organic acid is added to the polymer cement to be effective in reducing extraction time to a predetermined nickel residue level by 50 to 75 percent compared to extraction with a mineral acid alone. The organic-soluble acid is also effective in reducing the concentration of mineral acid necessary for the extraction by up to 90 percent compared to the concentration of mineral acid for extraction with a mineral acid alone.

For satisfactory extraction, the aqueous phase volume to organic phase volume ratio is kept within the range of from 0.1 to 0.35. For conventional extraction by mineral acids alone, the aqueous phase volume to organic phase volume ratio is typically at least 0.35. Therefore, not only can a lower concentration of mineral acid be used with the addition of an organic-soluble acid, but a lesser overall amount of aqueous phase may be used.

According to a more preferred embodiment of the method of the present invention, the pH of the aqueous phase is maintained at no more than 2.

The method will also remove metal residue from hydrogenation catalyst and the polymer cement may be hydrogenated with a metal based hydrogenation catalyst prior to addition of the organic-soluble acid.

Although the extraction method will work well on any organic polymer cement, by example herein an elastomeric block copolymer is described. Elastomeric block copolymer suitable for use are known in the art, as disclosed for instance in Stevens et al. US patent No. 5,194,530 (March 16, 1993). The copolymers are made by polymerising monomers selected from the group conjugated alkadienes, monoalkenyl-substituted aromatic compounds and mixtures thereof. The elastomeric block copolymers have at least two resinous endblocks of polymerised monovinyl aromatic compound, thus giving a resinous segment, and an elastomeric midblock of polymerised conjugated diene, thus giving an elastomeric segment. The copolymers can be linear, A-B-A, or radial. It is also possible to use a mixture of block copolymers, such as a combination of a high molecular weight copolymer and a medium molecular weight copolymer. Suitable monovinyl aromatic compounds are those having 8 to 20 carbon atoms as exemplified by styrene and styrene homologues such as alpha-methylstyrene and paramethylstyrene. Styrene is especially preferred. Suitable conjugated dienes include those having 4 to 8 carbon atoms. Illustrative of such conjugated dienes are 1,3-butadiene (butadiene), 2-methyl-1,3-butadiene (isoprene), 1-3-pentadiene (piperylene), 1,3-octadiene, and 2-methyl-1,3-pentadiene. Preferred conjugated dienes are butadiene and isoprene, most preferably butadiene.

Polymerisation of conjugated diene hydrocarbons is done anionically with lithium initiators and is well known as described in US Patents Nos. 4,039,503 and Re. 27,145. Consequently, the metal residues from the polymerisation are lithium. Alternatively, anionic polymerisation of conjugated dienes may be performed using protected functional initiators (PFI) as described in US Patents Nos. 5,391,663 and 5,146,168.

According to another preferred embodiment of the method of the present invention, the polymer cement is hydrogenated with a metal-based hydrogenation catalyst prior to the addition of the organic-soluble acid, whereby the polymer cement comprises metal polymerisation initiator residue and metal hydrogenation catalyst residue.

Preferably, the residue of the polymerisation initiator is lithium and the residue of the hydrogeneration catalyst is nickel and aluminium

When the conjugated diene used is butadiene, the copolymers may be hydrogenated to such a degree that the unsaturation of the elastomeric block is greatly reduced without significant change in unsaturation of the resinous block component. This is achieved with nickel catalysts as described in US Patents Nos. Re. 27,145 and 4,970,254. The residues of the hydrogenation catalyst are nickel and aluminium. The hydrogenated copolymers may be viewed as S-EB-S polymers, where the S refers to the monovinyl aromatic, generally styrene, endblocks and the EB represents ethylene/butylene, which is the structure resulting from the hydrogenation of polymerised 1,3-butadiene.

Other ingredients may be present including pigments, fragrances, stabilizers, flame retardants, surfactants, waxes, flow promoters, solvents, and materials added to enhance processability and pellet handling of the composition. The compositions can also contain 5 to 40 weight percent based on the weight of hydrocarbon component of a filler such as a hard inorganic mineral filler.

It has been found that the acidity of the system also affects the extraction efficiency. As the contacting mixture becomes less acidic, the metal residues tend to migrate to the organic phase. Since it is desirable to remove as much of the metal as possible to the aqueous phase, the pH of the aqueous phase should be maintained at no more than 2.

Air or oxygen may also be added to the system, usually after the mixer is turned on, although oxygen may be added to the cement phase before addition of the aqueous phase.

### Example

Extraction tests were run on a polybutadiene polymer cement after completion of hydrogenation with a nickel-based catalyst. The polymer solution consisted of a styrene-butadiene-styrene block copolymer with a number-average molecular weight of 190,000 g/mole, of which about 30% by weight was styrene, dissolved in cyclohexane at a concentration of 13 %w. The polymer cement was hydrogenated with catalyst prepared from nickel octoate and triethyl aluminium. Nickel and aluminium levels in cement were determined by atomic adsorption (AA) spectroscopy. The metal extractions were performed in a baffled 5-liter extraction vessel with a height to diameter ratio of 2.2:1. Mixing was provided via a shaft filled with two 6.35 cm (2.5-inch) diameter flat-blade turbine mixers rotating at the indicated tip speed. The extraction additives and extraction times were as follows and are summarised in the Table:
Run 1: The extractor was charged with 2700 ml of polymer cement and the contents were heated to 82°C. 900 g of preheated 1 %w phosphoric acid was charged through the bottom of the reactor. The mixer speed was adjusted to 7.1 m/hr (1400 ft/min). Immediately thereafter a mixture of 3% oxygen in nitrogen was bubbled through the reactor contents at 250 ml/min for 5 minutes. Samples of the mixture were pulled at various time intervals and centrifuged at about 10⁶ g-minutes to completely separate the phases. The polymer cement phase was analysed by AA for residual nickel and extraction was terminated when the residual nickel value reached 1.5 ppm or below. Results are shown in the Table.
Run 2: The extractor was charged with 2700 ml of polymer cement and the contents were heated to 82°C. 10.47 g of bis(2-ethylhexyl) phosphoric acid (D2EHPA) was added and pre-mixed into the cement for 5 minutes. The mixture was shut off, and 900 g of preheated 1 %w phosphoric acid was charged through the bottom of the reactor. The mixer speed was adjusted to 7.1 m/hr (1400 ft/min). Immediately thereafter a mixture of 3% oxygen in nitrogen was bubbled through the reactor contents at 250 ml/min for 5 minutes. Samples of the mixture were pulled at various time intervals and centrifuged at about 10⁶ g-minutes to completely separate the phases. The polymer cement phase was analysed by AA for residual nickel and extraction was terminated when the residual nickel value reached 1.5 ppm or below. Results are shown in the Table.
Run 3: Run 2 was repeated with 5.24 g D2EHPA.
Run 4: Run 2 was repeated with 2.62 g D2EHPA.
Run 5: Run 2 was repeated with 1.31 g D2EHPA.
Run 6: Run 1 was repeated with the mixer speed reduced to 3.6 m/hr (700 ft/min).
Run 7: Run 2 was repeated with the mixer speed reduced to 3.6 m/hr (700 ft/min).
Run 8: Run 2 was repeated with the mixer speed reduced to 1.3 m/hr (260 ft/min).
Run 9: Run 2 was repeated using 1130 ppm 2-ethylhexyl acid phosphate (2-EHPA, 1:1 molar mixture of mono- and bis(2-ethylhexyl) phosphoric acid) in place of D2EHPA.
Run 10: Run 1 was repeated using 1 %w sulphuric acid in place of phosphoric acid. The polymer cement was analysed by AA for residual aluminium and extraction was terminated when the residual aluminium value was below 2 ppm. Results are shown in the Table.
Run 11: Run 10 was repeated with the addition of 4970 D2EHPA to the cement prior to extraction.
Run 12: Run 10 was repeated with 0.1 %w sulphuric acid. Residual aluminium levels were not determined.
Run 13: Run 12 was repeated with the addition of 4970 D2EHPA to the cement prior to extraction. Residual aluminium levels were not determined.
Run 14: Run 11 was repeated with the amount of sulphuric acid charged to the extractor reduced to achieve an aqueous to organic ratio of 0.1 vol/vol.
Run 15: Run 11 was repeated using 2500 ppm "butyl acid phosphate' (BAP, 1:1 mixture mono- and bis(butyl) phosphoric acid) in place of D2EHPA.
Run 16: Run 11 was repeated using 2500 ppm IONQUEST® 801 (phosphonic acid, (2-ethylhexyl), mono (2-ethylhexyl) ester, by Albright & Wilson Americas, Inc.) in place of D2EHPA.
Run 17: Run 11 was repeated using 2500 ppm dodecylbenzene sulfonic acid (DDBSA) in place of D2EHPA.
Run 18: Run 11 was repeated using 2500 ppm DEQUEST® 2000 (nitrilotris(methylene)triphosphonic acid, by Monsanto Chemical Company), available as a 50 %w aqueous solution, in place of D2EHPA.
Run 19: For comparison, Run 2 was repeated using 1215 ppm 2-ethylhexanoic acid (2-EHA, pKa = 4.76) in place of D2EHPA.
Run 20: For comparison, Run 2 was repeated using deionized water in place of phosphoric acid.

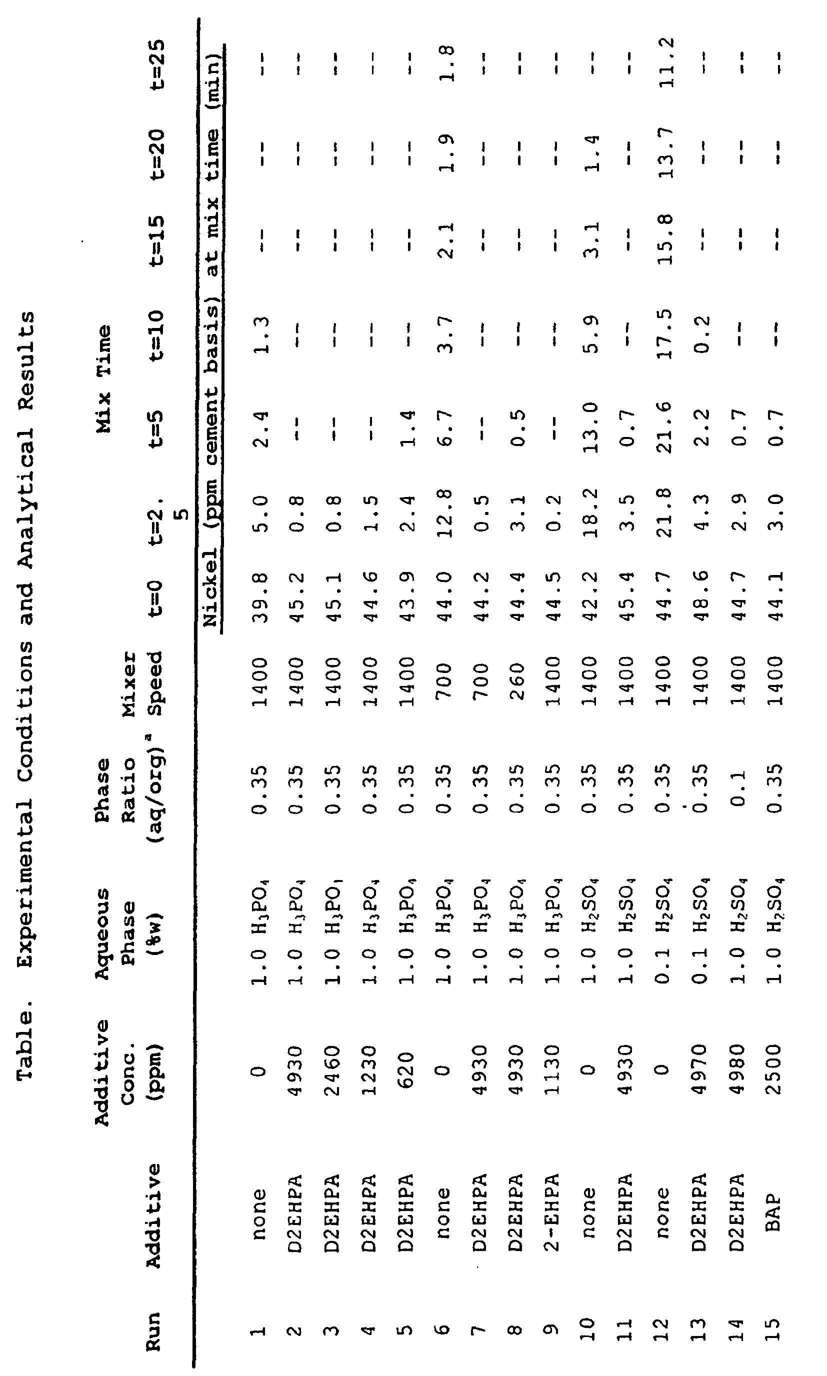

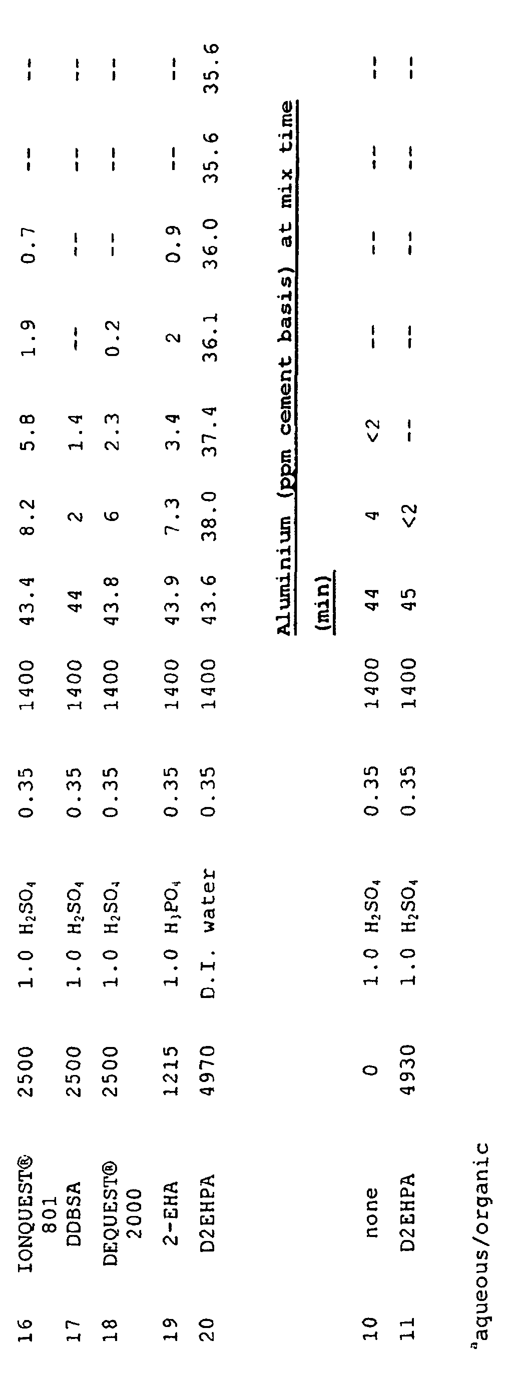

It can be seen that extraction time is accelerated with as little as 600 ppm D2EHPA (Examples 1-5). The acceleration is significant in that it shortens the extraction time required to prepare essentially metal-free polymer products, effectively reducing the size of processing equipment required.

It can also be seen that the presence of D2EHPA reduces the sensitivity of the cement to the extraction mixer speed (Examples 6-8).

Any mineral acid may be used as extractant. Both phosphoric acid (Examples 1-8 and 14) and sulphuric acid (Examples 9-13 and 15-18) were used with success. However, extracting with water (Example 20) was unsuccessful. Further, acid strengths which are quite low (Examples 11 and 12) are effective in the presence of an additive. Also, a comparison of Examples 12 and 13 indicates the catalysed extraction is effective at low aqueous to organic phase ratios (vol/vol) where the organic phase is expected to be the continuous phase during the extraction.

The example has described the invention in detail for the purpose of illustration only.

## Claims

1. A method of removing metal residues from a polymer cement, said method comprising: polymerising a monomer with a metal-based polymerisation initiator to give a polymer cement having metal polymerisation initiator residue; adding an organic-soluble acid having a pKa no greater than 4.5, selected from the group mono(2-ethylhexyl) phosphoric acid, bis(2-ethylhexyl) phosphoric acid, mono(butyl) phosphoric acid, bis(butyl) phosphoric acid, dodecylbenzenesulfonic acid, 2-ethylhexylphosphonic acid mono(2-ethylhexyl) ester, nitrilotris(methylene)-triphosphonic acid, and mixtures thereof, to the polymer cement, thereby forming an acid containing organic phase; mixing the organic phase with an aqueous phase containing a mineral acid; and recovering the polymer cement free of metal residue.

2. A method according to claim 1 wherein the organic-soluble acid is bis(2-ethylhexyl) phosphoric acid.

3. A method according to claim 2 wherein the bis(2-ethylhexyl) phosphoric acid is added at a concentration of at least 600 ppm.

4. A method according to any one of claims 1 to 3 wherein the ratio of aqueous phase volume to organic phase volume is in the range of from 0.1 to 0.35.

5. A method according to any one of claims 1 to 4 further comprising maintaining a pH of the aqueous phase at no more than 2.

6. A method according to any one of claims 1 to 5 wherein the polymer cement is an elastomeric block copolymer having at least two resinous endblocks of polymerized monovinyl aromatic compound and an elastomeric midblock of polymerised conjugated diene.

7. A method according to any one of claims 1 to 6 further comprising hydrogenating the polymer cement with a metal based hydrogenation catalyst prior to addition of the organic-soluble acid, whereby the polymer cement has metal polymerisation initiator residue and metal hydrogenation catalyst residue.

8. A method according to claim 7 wherein the residue of the polymerisation initiator is lithium and the residue of the hydrogenation catalyst is nickel and aluminium.

## Patentansprüche

1. Verfahren zur Entfernung von Metallrückständen aus einem Polymerzement, wobei das Verfahren umfasst:
das Polymerisieren eines Monomers mit einem Metall-basierten Polymerisationsinitiator, um einen Polymerzement zu ergeben, der einen Metallpolymerisationsinititatorrest aufweist; das Zugeben einer organisch-löslichen Säure, die einen pKa von nicht mehr als 4,5 aufweist, ausgewählt aus der Gruppe aus mono(2-Ethylhexyl)-phosphorsäure, bis-(2-Ethylhexyl)-phosphorsäure, mono-(Butyl)-phosphorsäure, bis-(Butyl)-phosphorsäure, Dodecylbenzolsulfonsäure, 2-Ethylhexylphosphonsäuremono-(2-ethylhexyl)-ester, Nitrilotris-(methylen)-triphosphonsäure, und Mischungen davon, zu dem Polymerzement, wodurch eine Säure enthaltende, organische Phase gebildet wird; das Mischen der organischen Phase mit einer wässrigen Phase, die eine anorganische Säure enthält; und das Rückgewinnen des Polymerzements, der vom Metallrest befreit ist.

2. Verfahren nach Anspruch 1, worin die organisch lösliche Säure bis-(2-ethylhexyl)-phosphorsäure ist.

3. Verfahren nach Anspruch 2, worin die bis-(2-Ethylhexyl)-phosphorsäure in einer Konzentration von wenigstens 600 ppm zugegeben wird.

4. Verfahren nach einem der Ansprüche 1 bis 3, worin das Verhältnis des Volumens der wässrigen Phase zur organischen Phase im Bereich von 0,1 bis 0,35 liegt.

5. Verfahren nach einem der Ansprüche 1 bis 4, weiter umfassend das Beibehalten eines pHs der wässrigen Phase von nicht mehr als 2.

6. Verfahren nach einem der Ansprüche 1 bis 5, worin der Polymerzement ein elastomeres Blockcopolymer ist, das wenigstens zwei Harz-Endblöcke aus polymerisierten monovinyl-aromatischen Verbindungen hat und einen elastomeren Mittelblock eines polymerisierten konjugierten Diens aufweist.

7. Verfahren nach einem der Ansprüche 1 bis 6, weiter umfassend das Hydrieren des Polymerzements mit einem Metall-basierten Hydrierkatalysator vor der Zugabe der organisch-löslichen Säure, wobei der Polymerzement einen Metallpolymerisationsinitiatorrest und einen Metallhydrierkatalysatorrest aufweist.

8. Verfahren nach Anspruch 7, worin der Rest des Polymerisationsinitiators Lithium ist und der Rest des Hydrierkatalysators Nickel und Aluminium ist.

## Revendications

1. Procédé d'élimination de résidus métalliques d'un ciment polymère, ledit procédé comprenant : la polymérisation d'un monomère avec un initiateur de polymérisation à base de métal pour former un ciment polymère ayant un résidu d'initiateur de polymérisation métallique; l'addition au ciment polymère d'un acide soluble dans les solvants organiques et ayant un pKa ne dépassant pas 4,5, choisi dans le groupe des éléments suivants : acide mono(2-éthylhexyl)phosphorique, acide bis(2-éthylhexyl)phosphorique, acide mono(butyl)-phosphorique, acide bis(butyl)phosphorique, acide dodécylbenzènesulfonique, ester mono(2-éthylhexylique) de l'acide 2-éthylhexylphosphonique, acide nitrilotris-(méthylène)-triphosphonique et leurs mélanges, formant de la sorte un acide contenant une phase organique; le mélange de la phase organique avec une phase aqueuse contenant un acide minéral; et la récupération du ciment polymère exempt de résidus métalliques.

2. Procédé selon la revendication 1, dans lequel l'acide soluble dans les solvants organiques est l'acide bis(2-éthylhexyl)phosphorique.

3. Procédé selon la revendication 2, dans lequel l'acide bis(2-éthylhexyl)phosphorique est ajouté en concentration d'au moins 600 ppm.

4. Procédé selon l'une quelconque des revendications 1 à 3, dans lequel le rapport du volume de la phase aqueuse au volume de la phase organique se situe dans la plage de 0,1 à 0,35.

5. Procédé selon l'une quelconque des revendications 1 à 4, comprenant en outre le maintien d'un pH de la phase aqueuse à pas plus de 2.

6. Procédé selon l'une quelconque des revendications 1 à 5, dans lequel le ciment polymère est un copolymère élastomère séquencé ayant au moins deux séquences terminales résineuses de composé monovinylaromatique polymérisé et une séquence médiane élastomère de diène conjugué polymérisé.

7. Procédé selon l'une quelconque des revendications 1 à 6, comprenant en outre l'hydrogénation du ciment polymère avec un catalyseur d'hydrogénation à base de métal avant l'addition de l'acide soluble dans les solvants organiques, dans lequel le ciment polymère a un résidu d'initiateur de polymérisation métallique et un résidu de catalyseur d'hydrogénation métallique.

8. Procédé selon la revendication 7, dans lequel le résidu de l'initiateur de polymérisation est le lithium et le résidu du catalyseur d'hydrogénation est le nickel et l'aluminium.
